# EUROPEAN PATENT APPLICATION

(11) **EP 3 031 848 A1**
(43) Date of publication of application: **15.06.2016**
(21) Application number: 14197006.1
(22) Date of filing: 09.12.2014
(51) Int. Cl.: C08J 5/18, H01G 4/18, C08G 71/02

(54) **Dielectric material and dielectric film**

(71) Applicant: ABB Technology Ltd, 8050 Zürich (CH)
(72) Inventor: Hillborg, Henrik, 722 10 Västerås (SE); Petersson, Linnea, 723 34 Västerås (SE); Lin, Minren, State College, PA Pennsylvania 16801 (US); Zhang, Qiming, State College, PA Pennsylvania 16803 (US); Cheng, Zhaoxi, State college, PA Pennsylvania 16803 (US)
(74) Representative: Axell, Kristina

(57) **Abstract**

The present invention relates to a dielectric material wherein the dielectric material comprises a polymer according to formula I 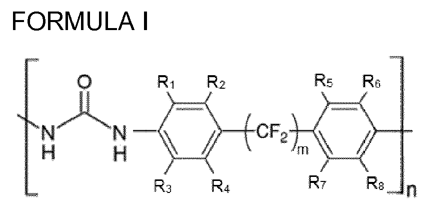 wherein R₁-R₈ are the same or different, each of R₁-R₈ is selected from the group consisting of hydrogen, a C₁-C₁₀ alkyl group and combinations thereof, and wherein m=2-15. Further the invention relates to a dielectric film made of the dielectric material, an energy storage device comprising a dielectric film, a capacitor comprising a metallized dielectric film and a process for preparing a dielectric film.

## Description

### TECHNICAL FIELD

The present invention relates to the field of dielectric materials, dielectric films, process for preparing dielectric films, energy storage devices and capacitors comprising dielectric films.

### BACKGROUND

Polymeric dielectric materials are extensively used in power products today. The polymeric dielectric material in form of films in capacitors for example, are inexpensive, possess high dielectric breakdown strength, high energy density and low dielectric loss compared to ceramic dielectrics and electrolytes. Current polymeric dielectrics are e.g. PP (polypropylene), PET (polyethylene terephtalate) and PC (polycarbonate). Biaxially oriented polypropylene (BOPP) is attractive for energy storage applications such as capacitors due to its high dielectric breakdown strength and low dielectric loss for example. Large amounts of these BOPP films are manufactured by a thermoplastic film extrusion process, either by blow moulding or a tenter process. However, due to low dielectric constant of those current polymeric dielectric material the energy density is today limited to below 5 J/cm³.

Strongly coupled dipolar, semicrystalline polymers such as PVDF (polyvinylidenefluoride) can be used as dielectric materials with a high energy density due to the material's large dielectric constant and the fact that it is processed as thermoplastics, but exhibits too high dielectric losses for the use in HV capacitor applications. With optimized compositions THV terpolymers (based on poly(vinylidenefluoride-tetrafluoroethylene-hexafluoropropylene)) may combine the high dielectric constant of vinylidenefluoride, the high thermal stability and low loss of tetrafluoroethylene, and a thermal processing capability of hexafluoropropylene [Zhang et al, IEEE Trans Diel Electr Insul, 2012, 19, pp 1158-1166]. However, the losses are still high and the energy density is below 5 J/cm³.

Polymer dielectrics with randomly oriented dipoles exhibiting a high dipole moment can be used for reducing or even totally eliminating the polarization hysteresis loss. Compared with traditionally used non-polar polymers, such as biaxially oriented PP, the randomly oriented dipoles provide a stronger scattering of the charge carriers, due to Coulombic interactions. This reduces the conduction current in the dielectric film as well as increases the dielectric breakdown strength.

In previous works, polymers based on aromatic polythiourea (ArPTU), an amorphous polymer with weak coupling among the dipoles, exhibited a high electric energy density (> 20 J/cm³), a dielectric constant of 4.5 and low losses (tan delta < 0.02) [Shan Wu et al, Adv. Mater. 2013, 25, 1734-1738]. Due to the hydrophobic aromatic rings situated next to the hydrophilic polythiourea, the polymers were not sensitive to moisture. However the polymer backbone is very rigid and the polymer could not be isolated as freestanding films.

JP2001237241A2 discloses a spin coated dielectric film comprising fluorinated polymer, the film having low dielectric constant, low hygroscopic characteristic and high temperature resistance used as interlayer insulation.

JP1175714A2 discloses a thin dielectric film made by solvent-free film producing method for example by deposition, such as plasma Chemical Vapor Deposition (CVD). Polyurea is mentioned as a polymer for the film. The aim is to obtain a thin film with high performance.

In JP3050709A2 a thin film is made by a vapour deposition polymerization process. Fluorinated or fluoroalkylation monomers of two kinds of the monomers having benzene rings as skeletons are used.

JP4037106A2 discloses a thin capacitor film of an aromatic polyurea layer made by vacuum depositing method.

WO11087344 discloses manufacturing of polymers for polymer electrolyte membrane.

Current HVDC topology solutions demand a high number of capacitor units making the installations large. A footprint reduction of dry DC link capacitor is therefore wanted in order to increase the competitiveness of HVDC installations. About 70% of a dry DC link capacitor is made up of the capacitor film. The performance of the film therefore needs to be improved in order to receive a footprint reduction. The life time of current DC link capacitors is tied to the ambient temperature of the ventilation hall. Slight increase in the ambient temperature will have an effect on the performance of the capacitor. Current ventilation halls needs therefore to be cooled to temperatures below 60°C. It is an object with the present invention to solve or at least minimize those problems and also to provide a solution which is environment friendly.

### SUMMARY OF THE INVENTION

The objects above have been achieved with the present invention defined in the appended claims.

According to a first aspect of the invention, the present invention relates to a dielectric material which comprises a polymer according to formula I 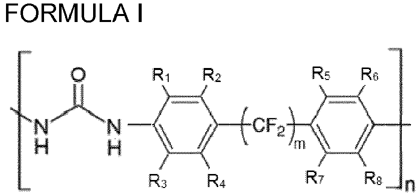 wherein R₁-R₈ are the same or different, each of R₁-R₈ is selected from the group consisting of hydrogen, a C₁-C₁₀ alkyl group and combinations thereof, and wherein m=2-15. The polymer is a fluorinated aliphatic-aromatic polyurea polymer, f-AAPU. In the polymer according to formula I the fluorinated aliphatic chain is directly linked with an aromatic urea unit. The polymer is kept flexible for thermoplastic processing and the polymer can be compounded without the use of solvent. By this the material can be extruded in contradiction to commonly used solvent casting processes. Thin films can be produced without the use of solvent and it is not necessary to transport away a large amount of solvent which is necessary when using a spin coating process. In addition, the synthesis of the polymer may be a process without the use of isocyanate which makes the dielectric film and the production of the film more environmentally friendly than previous solutions. The strong dipolar moment of the urea unit is not sensitive to moisture due to highly hydrophobic f-aliphatic chains and aromatic rings surrounding the urea unit. This leads to low dielectric loss and high dielectric breakdown strength, which is an important feature for use in capacitors for example.

The dielectric material may comprise a polymer according to formula I, wherein R₁-R₈ is selected from the group consisting of hydrogen, a C₁-C₆ alkyl group and combinations thereof, and wherein m=4-8. The polymer is suitable for thermoplastic processing and has a high dielectric breakdown strength.

Further, the dielectric material may comprise a polymer according to formula I, wherein each of R₁-R₈ is hydrogen and wherein m=6, which polymer has shown to have good dielectric properties. A fluorinated aliphatic-aromatic polyurea polymer of formula II wherein each of R₁-R₈ is hydrogen and wherein m=6 is disclosed below.

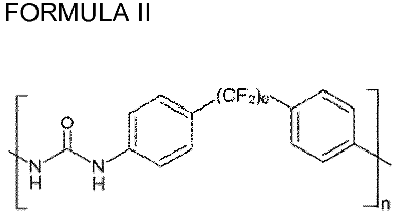

The dielectric material may comprise 80 to 100 weight % of the polymer according to formula I calculated on the total weight of the dielectric material. The dielectric material may further comprise up to and including 20 weight% of additives, wherein the additives are selected among antioxidants, process stabilizers and fillers. The sum of the polymer according to formula I and the additive in the dielectric material is not more than 100 weight %, calculated on the total weight of the dielectric material. Reinforcing fillers may be for example used in order to obtain a strong dielectric material which is an important feature when producing dielectric films. The dielectric material may comprise 80 to 99.99 weight% of the polymer according to formula I calculated on the total weight of the dielectric material. The dielectric material may comprise 0.01 weight% to 20 weight% of additives calculated on the total weight of the dielectric material. The additives are selected among antioxidants, process stabilizers and fillers and improve the workability, strength and life, for example. Weight% is calculated on the total weight of the dielectric material if nothing else is disclosed.

The dielectric material may comprise 90 to 100 weight % of the fluorinated aliphatic-aromatic polyurea polymer according to formula I, calculated on the total weight of the dielectric material. The dielectric material may also comprise up to and including 10 weight% of additives. The dielectric material may comprise 90 to 99.99 weight% of the polymer according to formula I. Further the dielectric material may comprise 0.01 to 10 weight % of additives.

Further, the dielectric material may consist of 100 weight% of the fluorinated aliphatic-aromatic polyurea polymer according to formula I. A pure dielectric material of the fluorinated aliphatic-aromatic polyurea polymer will achieve an excellent dielectric material and it will be possible to produce a dielectric film with very good electric properties.

The fluorinated aliphatic-aromatic polyurea polymer according to formula I may have a glass transition (Tg) of at least 150°C. Further, the fluorinated aliphatic-aromatic polyurea may have a Tg of at least 175°C. The operating temperature of a capacitor is preferably below the Tg since the dielectric losses increase when the temperature is above Tg. It is therefore desirable to have a relatively high Tg in order to maintain low dielectric losses.

The dielectric material may have an energy density of at least 5 J/cm³. A high energy density makes it possible to reduce the system volume in an article when a dielectric material is used. The capacitor footprint may for example be reduced if a dielectric film made of the dielectric material is used.

The dielectric material may have an energy density of at least 8 J/cm³. An even more reduced system volume may be achieved. Further, the dielectric material may have an energy density of at least 9 J/cm³.

The fluorinated aliphatic-aromatic polyurea polymer according to formula I may have a dielectric loss described by a tanδ < 0.02 at a frequency of 10 Hz to 1 MHz at 20 to 180°C. Low dielectric losses is a desired property for HV Capacitors.

The dielectric material may have a dielectric breakdown strength of at least 500 V/µm which improves the reliability of the material. Further, the dielectric material may have a dielectric breakdown strength of at least 600 V/µm.

The present invention further relates to a dielectric film made of the dielectric material according to the present invention. All features disclosed for the dielectric material also apply to the dielectric film as disclosed in this application.

Thus, the dielectric film is made of the dielectric material which comprises a polymer according to formula I.

The dielectric film may be an extruded film. The dielectric film is manufactured using a thermoplastic film extrusion process. The fluorinated aliphatic-aromatic polyurea polymer according to formula I has very good dielectric properties and at the same time it is possible to extrude the film and it will be possible to produce thin films with good properties to be used in an electrical device, such as a capacitor.

The dielectric film may be metallized. Metallized dielectric films are suitable for use in capacitors. The dielectric film may be a capacitor film.

The invention also relates to an energy storage device comprising a dielectric film disclosed in this application.

Further the invention relates to a capacitor comprising a dielectric film according to the invention. The capacitor may comprise a wound metallized dielectric film according to the invention. The dielectric film has high dielectric breakdown strength and low dielectric losses.

The capacitor may be a HV capacitor. In addition, the capacitor may refer to a DC capacitor. Further it may relate to a HVDC capacitor.

The invention also relates to a process for preparing a dielectric film according to the invention, comprising the steps to:
(a) provide a dielectric material as defined herein, and
(b) extrude the dielectric material into a film and optionally
(c) metallize the dielectric film.

The invention also relates to the use of the dielectric material as defined herein as a capacitor film.

By "defined herein" is meant as defined in this patent application.

An alkyl group is a functional group with the formula C_{y}H_{2y+1} and y is an integer.

### SHORT DESCRIPTION OF FIGURES

Figure 1 shows a scheme for the synthesis of fluorinated aliphatic-aromatic polyurea (f-AAPU)
Figure 2 discloses a cross sectional view of a capacitor according to the invention
Figure 3 shows a ¹⁹F NMR spectrum of f-HDBA
Figure 4 (a) shows XRD of f-AAPU
Figure 4 (b) shows DMT Modulus of f-AAPU measured via AFM
Figure 5 (a) shows DSC of f-AAPU
Figure 5 (b) shows TGA of f-AAPU
Figure 6 (a) shows dielectric constant and dielectric tanδ of *f*-AAPU at 25 °C
Figure 6 (b) shows dielectric constant at frequency from 50 Hz to 1000 Hz measured by Lock-in Amplifier
Figure 7 (a1) shows dielectric constant and loss tanδ of *f*-AAPU from 20°C to 180°C

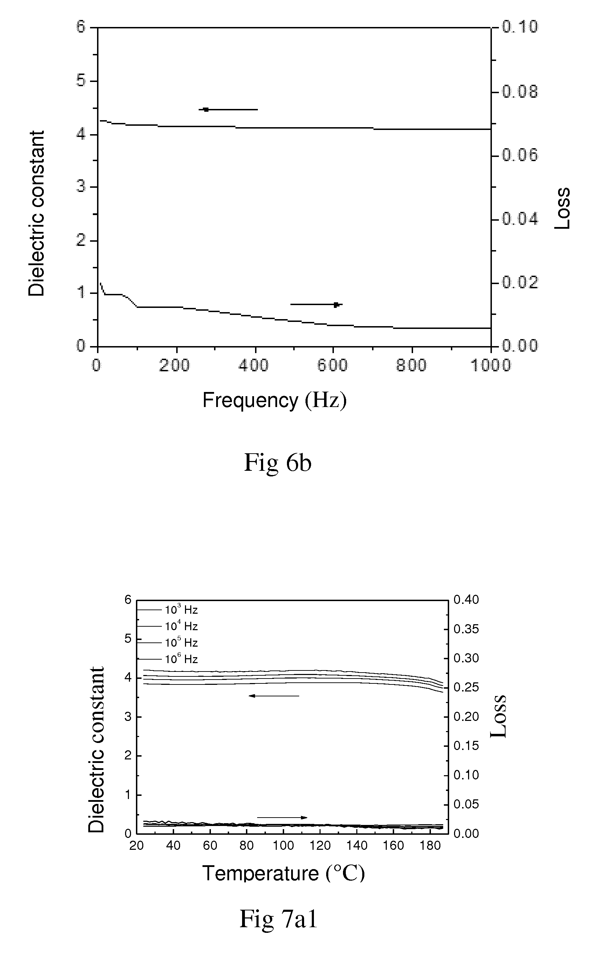

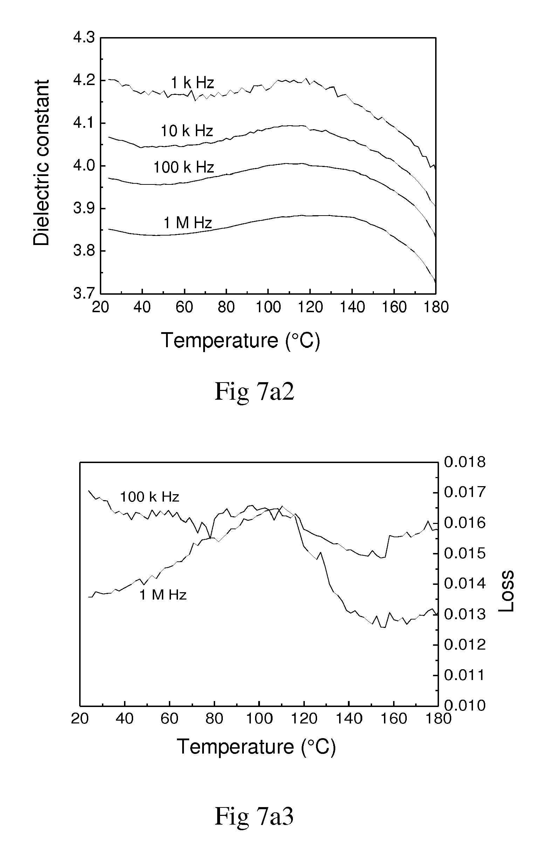

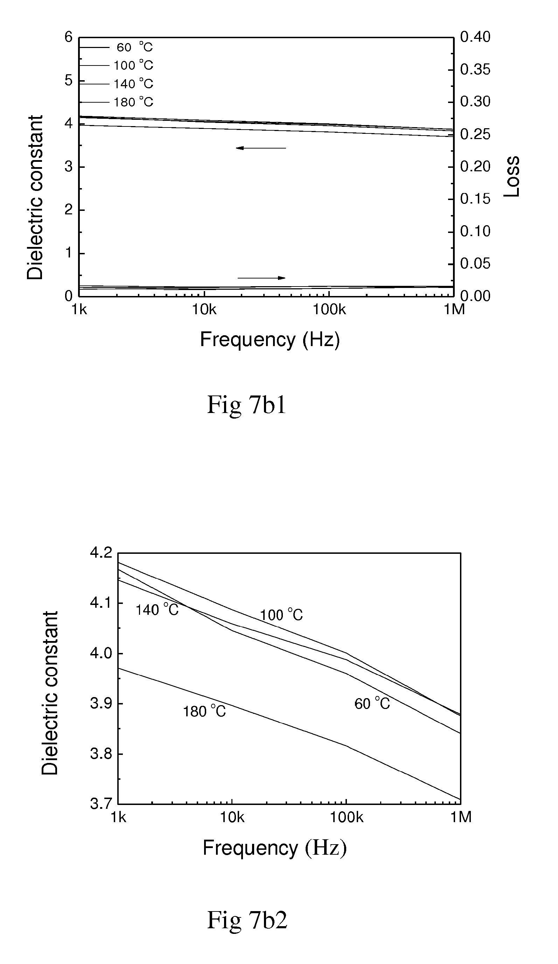

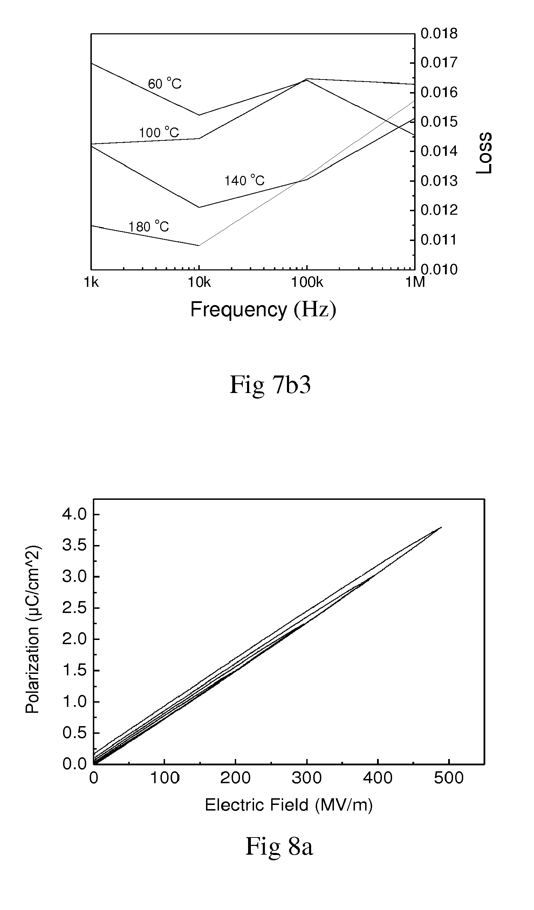

Figure 7 (a2) shows an expanded plot of dielectric constant of f-AAPU from 20°C to 180°C
Figure 7 (a3) shows an expanded plot of dielectric loss of f-AAPU from 20°C to 180°C
Figure 7 (b1) shows dielectric constants and loss tanδ from frequency of 1 KHz to 1 MHz at temperature of 60 °C, 100 °C, 140 °C and 180 °C
Figure 7 (b2) shows an expanded plot of dielectric constant of f-AAPU at 60°C, 100°C, 140°C and 180°C from frequency of 1 K Hz to 1 MHz
Figure 7 (b3) shows an expanded plot of dielectric loss of f-AAPU at 60°C, 100°C, 140°C and 180°C from frequency of 1 K Hz to 1 MHz
Figure 8 (a) shows P-E curves of the f-AAPU casting films under different applied fields at 10 Hz

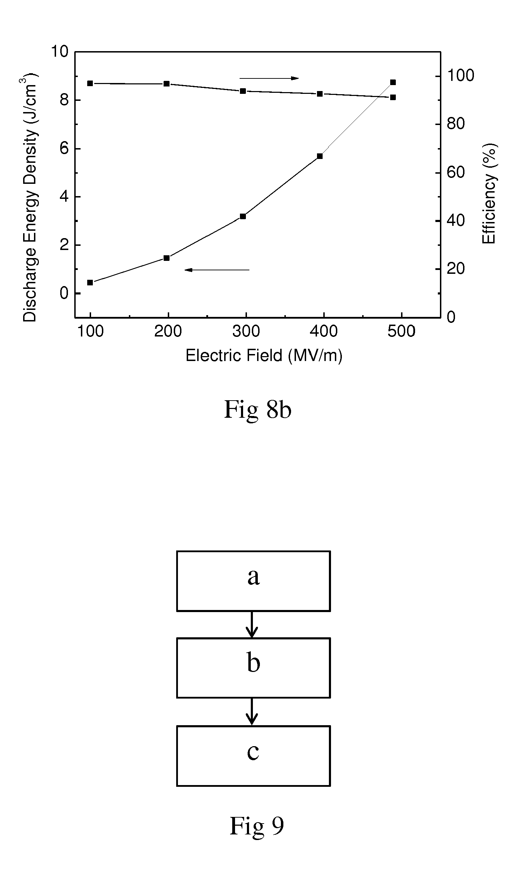

Figure 8 (b) shows the charge/discharge curves and efficiency of f-AAPU measured at room temperature
Figure 9 is a flow chart over a method of preparing a dielectric film according to the invention

### DETAILED DESCRIPTION

The invention will now be described more in detail hereinafter. However, other embodiments in different forms are possible within the scope of the present disclosure. The embodiments are provided by way of example and will fully convey the scope of the invention defined in the appended claims to those skilled in the art. Polymeric dielectric materials are extensively used as electrical insulation for a wide range of power products. Among energy storage and regulation devices polymer dielectrics can deliver and handle large electric energy with very high power density in a large system level. Compared with ceramic and electrolytic capacitors, metallized polymer film capacitors can be used under high voltage. The polymer according to the invention has a high dielectric constant, possess low dielectric loss and high dielectric breakdown strengths and which at the same time enables thermal process by extrusion.

The present invention relates to a dielectric material comprising a polymer according to formula I 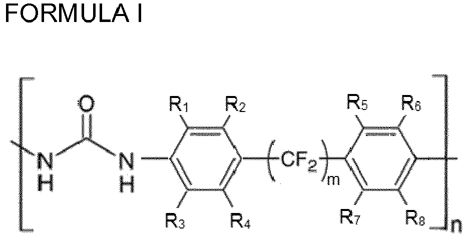 wherein R₁-R₈ are the same or different, each of R₁-R₈ is selected from the group consisting of hydrogen, a C₁-C₁₀ alkyl group and combinations thereof, and wherein m=2-15. The alkyl group may be straight or branched. As used herein an alkyl group is a substituent with the formula C_{y}H_{2y+1} and y is an integer.

The polymer has many properties which make it suitable for use in dielectric materials and dielectric films, which dielectric films have features which are excellent for dielectric capacitor films. The dielectric material is a high energy density material with low dielectric loss and high dielectric breakdown strengths. The fluorinated aliphatic chain directly linked with an aromatic urea unit leads to a more flexible polymer whereby the polymer can be thermally processed and the polymer can be compounded without the use of a solvent. This is contrary to the aromatic polythiourea which has been developed earlier and which is described in Shan Wu et al, Adv. Mater. 2013, 25, 1734-1738. The aromatic polythiourea has good electric properties, such as relatively high dielectric constant, high energy density and low dielectric loss. However, the aromatic polythiourea has a rigid structure and it is not possible to manufacture a free-standing film by a thermoplastic extrusion process. When making films of the aromatic polythiourea, the films are spin-casted where solvents are used. Due to the rigid structure it is not possible to extrude films. However, the dielectric film comprising the polymer of formula I according to the present invention has a structure which is suitable for thermoplastic processing. Without being bound to any theory, it is believed that it may be the fluorinated aliphatic chain directly linked with aromatic urea unit which keeps the polymer more flexible for thermal processing. In addition, the polymer also has a high dielectric breakdown strength. This may be the result of a strong dipolar moment of the urea unit which is still not sensitive to the moisture due to highly hydrophobic f-aliphatic chains and aromatic rings surrounding the urea unit. The fluorinated aliphatic-aromatic polyurea polymer according to the invention will have a high dipolar moment, which improves the dielectric breakdown strength.

Different conduction processes for dielectric polymers increase exponentially with electric field and also temperature. Hence, for dielectric materials to be operated at high temperature, it is critical to study and develop strategies to substantially reduce the conduction losses at high field and high temperatures. Compared with non-polar polymers such as BOPP, polar polymers with randomly distributed dipoles provide much stronger scattering to the charge carriers, due to strong Coulombic interaction between dipoles and charge carriers. This reduces the conduction current and prevents dielectric breakdown by stabilizing the electron energy. This has been achieved with the dielectric material comprising the polymer according to formula I.

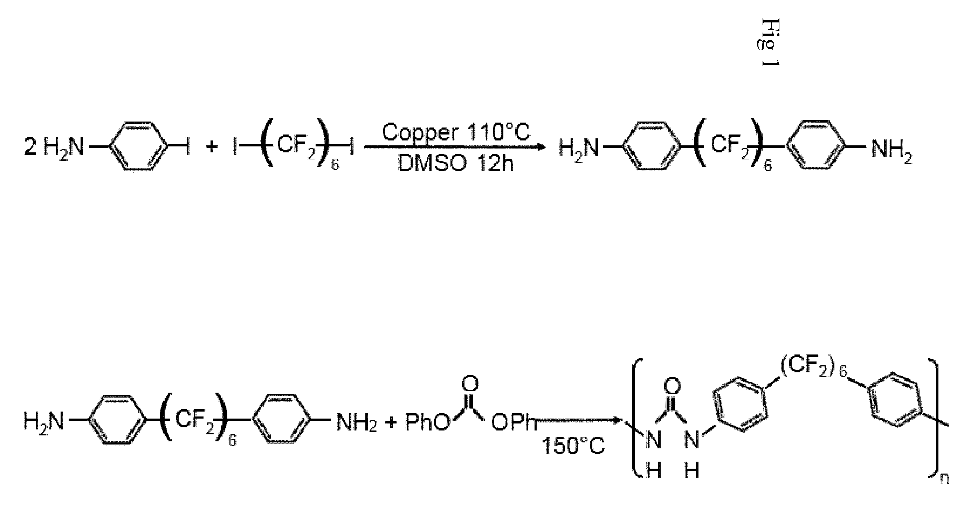

The fluorinated aliphatic-aromatic polyurea which was synthesized according to the scheme in Figure 1, has a fluorinated aliphatic chain, directly linked with the aromatic urea unit. It is believed that the fluorinated aliphatic chain increases the flexibility of the polymer backbone, making it possible to be processed as a thermoplastic. The strong dipolar moment of the urea unit is still not sensitive to moisture due to the hydrophobic fluorinated aliphatic chains and the aromatic structures.

The dielectric material may comprise a polymer according to formula I wherein R₁-R₈ is selected from the group consisting of hydrogen, a C₁-C₆ alkyl group and combinations thereof, and wherein m=4-8. By amending the number of CF₂ groups, i.e. amending the figure m, it may be possible to influence the processing ability of the polymer. A higher number of CF₂ groups may in addition increase the temperature which the material can withstand. Further, while having a high dipolar moment the possibility of thermal processing has been improved in the dielectric material. The material according to the invention is thus possible to melt process. The dielectric material may comprise a polymer according to formula I wherein each of R₁-R₈ is hydrogen and wherein m=6. Formula II wherein each of R₁-R₈ is hydrogen and wherein m=6 (in formula I) is following below.

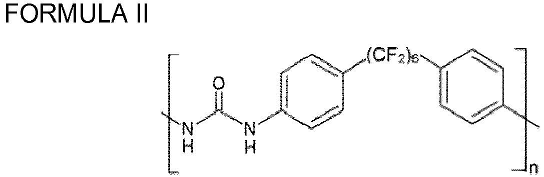

The polymer according to the present invention has been synthesized via a two-step synthetic route for which a detailed description for the synthesis of the fluorinated aliphatic-aromatic polyurea, fAAPU, according to formula II, is disclosed below in the Experimental part. The scheme for the synthesis is disclosed in Figure 1. The synthesis is a green process which is isocyanate free, solvent free and catalyst free, which makes the dielectric film environment friendly.

The dielectric material may comprise up to 100 weight% of the polymer according to Formula I calculated on the total weight of the dielectric material. Further the dielectric material may comprise 80 to 100 weight% of the polymer according to formula I or the dielectric material may comprise 80 to 99.99 weight% of the polymer according to formula I. In addition, the dielectric material may comprise 80 to 99.5 weight% of the polymer according to formula I. Further, the dielectric material may comprise 90 to 100 weight% of the polymer according to formula I or 90 to 99.99 weight% of the polymer according to formula I. The dielectric material may comprise at least 95 weight% of the polymer according to formula I. In addition, the dielectric material may comprise 95 to 99.99 weight% of the polymer according to formula I. Weight% of the polymer and the additives are calculated on the total weight of the dielectric material if nothing else is said.

The dielectric material may also comprise up to and including 20 weight% of additives calculated on the total weight of the dielectric material, or the dielectric material may comprise 0.01 to 20 weight % of additives. In addition, the dielectric material may comprise 0.5 to 20 weight% of additives. The dielectric material may comprise up to and including 10 weight% of additives or 0.01 to 10 weight% of additives. Further the dielectric material may comprise up to and including 5 weight% of additives. The dielectric material may also comprise 0.01 to 5 weight% of additives. The sum of the dielectric material and the additives will be at most 100 weight %, as disclosed above.

The dielectric material may consist of 100 weight% of the polymer according to formula I. The pure material will have excellent dielectric properties while it is possible to extrude the material to a dielectric film.

The additives may be selected among antioxidants, process stabilizers and fillers.

Antioxidants and process stabilizers may be based on hindered phenols, phosphites, secondary aromatic amines and hindered amines.

The antioxidants and process stabilizers may prevent the degradation of the polymer during manufacturing and use.

Fillers may be nano-meter sized inorganic particles, such as fumed silica. The nano-meter sized filler may be surface treated in order to disperse well into the polymer matrix. The particles can be dispersed either in the form of particle agglomerates as well as individual particles.

All weight% referring to formula I above correspond to a polymer according to Formula I when wherein R₁-R₈ are the same or different, each of R₁-R₈ is selected from the group consisting of hydrogen, a C₁-C₁₀ alkyl group and combinations thereof, and wherein m=2-15 as well as to formula II above.

The fluorinated aliphatic-aromatic polyurea according to formula I of the invention may have a dielectric constant of 3.5 to 4.5 at 1 kHz to 1 MHz and temperature 20 to 180°C. High dielectric constants yield a high energy density. Further, the fluorinated aliphatic-aromatic polyurea according to formula I may have a dielectric constant of 3.7 to 4.2 at 1 kHz to 1 MHz and temperature 20 to 180°C. Further, the polymer according to formula I may have a dielectric constant of 3.5 to 4.5 at 1 Hz to 1 MHz and temperature 20 to 180°C. In addition, the polymer according to formula I may have a dielectric constant of 3.7 to 4.2 at 1 Hz to 1 MHz and temperature 20 to 180°C. The dielectric constant may be 3.5 to 4.5 at 50 Hz to 1 MHz and temperature 20 to 180°C. Further the dielectric constant may be 3.7 to 4.2 at 50 Hz to 1 MHz and temperature 20 to 180°C.

The fluorinated aliphatic-aromatic polyurea polymer according to formula I preferably has a glass transition temperature, Tg, of at least 150°C. The polymer may have a Tg of at least 175°C. Above the glass transition temperature, the properties of a material may change. The dielectric losses can increase for example. A capacitor should be operated below Tg in order to keep the electric losses low. The operation of an electric device comprising the dielectric material, such as a capacitor, will thus be improved under the Tg. Thus, a high Tg is desired for a dielectric material. In one example it has been shown that the dielectric material according to the present invention has a Tg of about 175°C.

In addition, it is possible to process the dielectric material comprising the polymer according to formula I. The polymer according to formula I may thus be possible to be extruded to a dielectric film using a thermoplastic process. The possibility to melt process the dielectric material by extrusion is cheap and more practical than for example solvent casting. A better film will also be achieved by a higher molecular weight of the polymer which improves the dielectric properties. The film will have low dielectric loss and high dielectric breakdown strength.

The dielectric material according to the present invention will have a high energy density such as an energy density of at least 5 J/cm³, or at least 8 J/cm³ or even as high as at least 9 J/cm³.

The polymer has a dielectric loss, described by tanδ < 0.02 at a frequency of 1 Hz to 1 MHz at 20 to 180°C. Further the dielectric loss may be tanδ < 0.02 at a frequency of 10Hz to 1 MHz at 20 to 180°C. In addition, the dielectric loss may be tanδ < 0.02 at a frequency of 50Hz to 1 MHz at 20 to 180°C. The dielectric loss is kept low and the dielectric tanδ < 0.02 at a frequency of 100 kHz to 1 MHz at 20 to 180°C.

The dielectric material may have a high dielectric breakdown strength of at least 500 V/µm. This will make the material useful in high voltage application, such as high voltage capacitors.

The invention also refers to a dielectric film comprising the dielectric material disclosed above. All features described above for the dielectric material will also apply to the dielectric film.

The dielectric film may for example consist of 100 weight% of the polymer according to Formula I. The performance of a dielectric film consisting of 100 weight% of the polymer of formula II has unexpectedly shown to be very good which is shown in the Examples below.

The dielectric film may be thermally processed which means that the dielectric film may be extruded. The dielectric film may be extruded without the use of solvent. This will improve the film in several ways. It will be cheaper to produce than to produce a film by solvent casting for example. The molecular weight of the polymer will be higher, which improves the dielectric properties compared to solvent casted polymers, since only low molecular weight portion of polymer is soluble in the solvent.

The dielectric film may be produced in a cost effective manner by extrusion. This will enable a thin dielectric film to be produced with good electric properties. The thickness of the film may be 3 to 10 µm. The thickness may be 5 to 10 µm or the thickness may be 5 to 7 µm. The total voltage becomes lower with lower film thickness. Large volumes are produced for capacitor films and it is necessary to be able to extrude the capacitor films in order to obtain a cost effective production. It might be possible to solvent cast in large volumes, however according to the present invention, a more environmentally friendly extrusion process can be used together with an environmentally friendly polymer. The extrusion process can be used without solvent, and the polymer may be synthesized without isocyanate. In addition, as mentioned above, the dielectric properties will be improved in extruded dielectric films compared to solvent casted films.

As mentioned above, the dielectric film has many advantages which is useful as a capacitor film in a capacitor. The footprint of a capacitor may be reduced by the high energy density of the dielectric film material and a higher operation temperature is possible.

By the dielectric film it is possible to reduce the system volume and weight of a DC link capacitor and at the same time allow for higher ambient temperature.

Further, the dielectric film may be metallized.

The invention also refers to a method for preparing a dielectric film. The method includes the steps to:
a) provide a dielectric material as defined above, and
b) extrude the dielectric material into a film, and optionally to
c) metallize the dielectric film.

This can be seen in Figure 9 in which a flow chart for the method is disclosed. The method comprises to a) provide a dielectric material as defined herein and to b) extrude the dielectric material into a film. This can be achieved by a thermoplastic extrusion process. The method may be performed by extrusion without a solvent. Optionally, the method comprises to c) metallize the dielectric film.

Further, a metallized dielectric film may be used in an electrical device, such as a storage device. The invention further relates to a capacitor which comprises the dielectric material or the capacitor comprises the dielectric film as defined in this disclosure. By this high energy density capacitors may be obtained. The capacitors may be HV capacitors and further, the capacitors may be DC capacitors. A metallized film may be wound into a cylindrical shape in order to form a capacitor element or a capacitor body. The dielectric film may be extruded and then the film may be metallized with metals such as zinc or aluminum.

The dielectric film may be metallized when used in a capacitor and wound stacked together with a second dielectric metallized film and forming a capacitor body which will be described below.

A dielectric capacitor film may comprise a layer of a conducting metal deposited on at least a portion of the dielectric film. The conductive metal comprises aluminum, zinc, silver or a combination thereof. The conductive metal layer is deposited by chemical vapor deposition, high temperature vacuum operations or combinations thereof.

An example of a capacitor will now be described, but other capacitors may also be constructed. The dielectric films may be metallized dielectric films.

A capacitor may comprise a wound metallized dielectric film of the invention.

For example two metallized dielectric films are stacked together and wound around each other to form a cylindrical winding. The two dielectric films may be arranged with small lateral offsets between the films so that the metal layers can be contacted by metal spraying the lateral sides of the wind. This arrangement forms a capacitor.

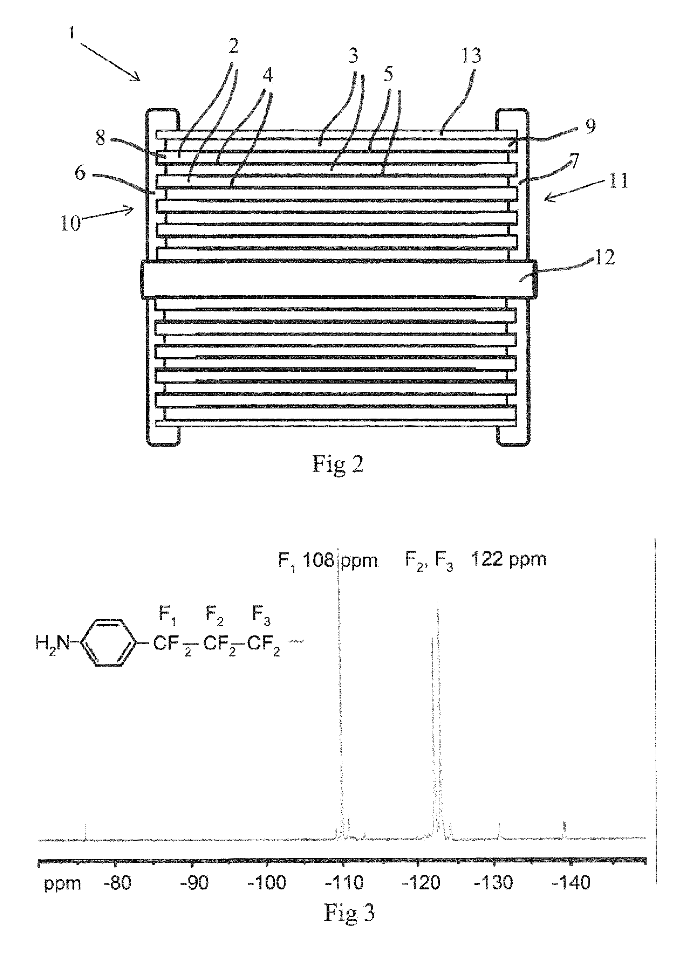

An example of a capacitor is disclosed in Figure 2. A capacitor 1 comprises metallized dielectric films comprising a dielectric material. The capacitor comprises a first and a second dielectric film 2, 3 which is metallized and wound around each other into a cylinder form around a bobbin or roll 12. The first and second dielectric films 2, 3 have first and second contact electrodes 4, 5, respectively, metallized on the dielectric films 2, 3. The first contact electrode 4 is arranged on the first dielectric film 2 and the second contact electrode 5 is arranged on the second dielectric film 3. Thereby the first and second contact electrodes 4, 5 are arranged on opposites sides of a dielectric film, either the first or the second dielectric film 2,3. Two electrically conducting contact elements 6, 7 are provided at each end of the wounded capacitor and are electrically connected to the first and second contact electrodes 4, 5. The dielectric films 2, 3 are wound with the second dielectric film 3 outside the first dielectric film 2 with the metallized contact electrodes 4, 5 arranged on the film surface which is facing in the direction inwards to the center of the cylindrical body.

The dielectric films may be unmetallized on the edges or at one of the edges. The first contact electrode 4 extends to the edge on one side of the first dielectric film, on the first end 10 of the capacitor 1, and is unmetallized on the other side, the second end 11 of the capacitor. The second contact electrode 5 extends to the edge on one side of the second dielectric film, on the second end 11 of the capacitor, and is unmetallized on the other side, the first end 10 of the capacitor. The unmetallised edges of the first and second contact electrodes respectively are thus arranged on opposite ends of the capacitor. The wound element containing the dielectric films 2, 3 is then wound with an unmetallized polymer film 13; often of the same type of polymer used in the dielectric films. A sufficient number of turns are wound in order to maintain a high enough compression to prevent any voids between the dielectric film 2 and 3. The width of the film 13 cover the full distance of dielectric films 2,3. This is shown in figure 2.

The first and second films 2, 3 are mutually displaced in relation to the width direction so that the edge 8 of the first dielectric film 2 having the first contact electrode 4 extended so that the electrode edge 8 is exposed on the first end 10 of the capacitor and the edge 9 of the second dielectric film 3 having the second contact electrode 5 extended so that the electrode edge 9 is exposed on the second end 11 of the capacitor.

First and second contact elements 6, 7 are formed by for example spraying of zinc to the to the end surfaces of the cylindrical body. The first contact element 6 is in contact with the exposed edge 8 of the first contact electrode 4 and they are electrically connected. In the same manner the second contact element 7 is in contact with the exposed edge 9 of the second contact electrode 5 and they are electrically connected.

The unmetallized edges of the dielectric films may be provided by masking the edges. This enables alternate layers of metallized film to have unmetallized regions at opposite edges to prevent electrical shorting of the electrodes of the capacitor when contact elements are formed at the ends of the capacitor.

The wounded capacitor body may have the shape of a circular cylindrical body or an elliptical cylindrical body. If the shape is a circular cylindrical body, a roll or bobbin may be used to wound the dielectric films around. An elliptical cylindrical body may be wound as a circular body and then the body is flattened to an elliptical cylindrical body. An example of a capacitor 1 is disclosed in Figure 2.

### EXAMPLES

### Synthesis of fluorinated aliphatic-aromatic polyurea

The aromatic polyurea according to formula II of the invention is synthesized via two-step synthetic route as illustrated in Figure 1. First, 4,4'-(perfluorohexane-1,6-diyl)dibenzeneamine (f-HDBA) is synthesized via coupling of diiodo-perfluorohexane and iodo-aromatic amine. This highly fluorinated aliphatic-aromatic diamine is currently not commercially available. After multistep purification, f-HDBA is produced as a yellow crystal.

Figure 3 discloses ¹⁹F NMR of f-HDBA.

In the second step of the synthesis, also shown in Figure 1, the polymer according to formula II, f-AAPU, is synthesized via polycondensation of f-HDBA with diphenyl carbonate (DPC) at 150°C under vacuum. This is a green process which is isocyanate free, solvent free and catalyst free. The polymer of formula II is isolated as a yellow solid.

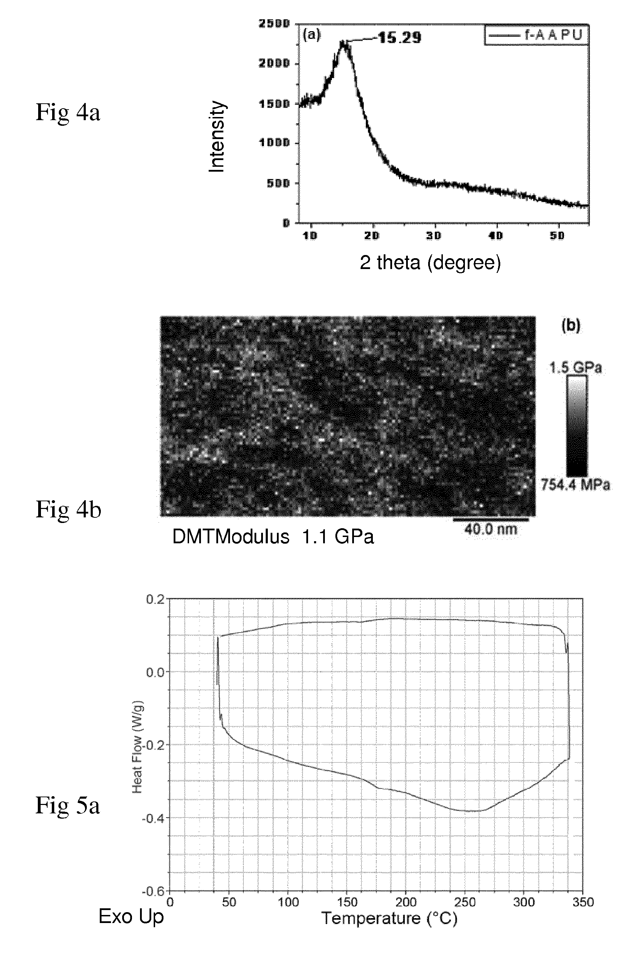

Figure 4a shows an XRD of fluorinated aliphatic-aromatic polyurea, f-AAPU, of formula II, and the broad peak at 2θ of 15.3° indicates that fluorinated aliphatic-aromatic polyurea, f-AAPU, is amorphous. There is a broad peak with low intensity at higher angle region for f-AAPU disclosed in Figure 4a, which is from the trace of impurity remained in the f-AAPU film.

DMT Modulus of fluorinated aliphatic-aromatic polyurea, f-AAPU, of formula II, is measured by AFM (Atomic Force Microscopy). DMT Modulus is measured using relative calibration with Polystyrene and an OTESPA probe. The fluorinated aliphatic-aromatic polyurea, the polymer of formula II, is deformed 1.5nm and the probe spring constant and radius were manipulated to a modulus of ∼1.1 GPa for f-AAPU (Figure 4b).

Figure 5a discloses a Differential Scanning Calorimetry (DSC) diagram of the polymer according to formula II, the fluorinated aliphatic-aromatic polyurea. A Universal V3.8B TA Instruments was used and the sample size of f-AAPU was 5.2800 mg. The DSC indicated that Tg of the polymer of formula II starts at 175°C, and there is a broad peak from 220 °C to 310°C and the polymer of formula II decomposed above 330°C. There is no re-crystallized peak but a glass transition curve at 175 °C in cooling down area of the DSC. The presented data can be determined using Differential Scanning Calorimetry according to ISO 11357-2:2013, part 2: Determination of glass transition temperature and glass transition step height.

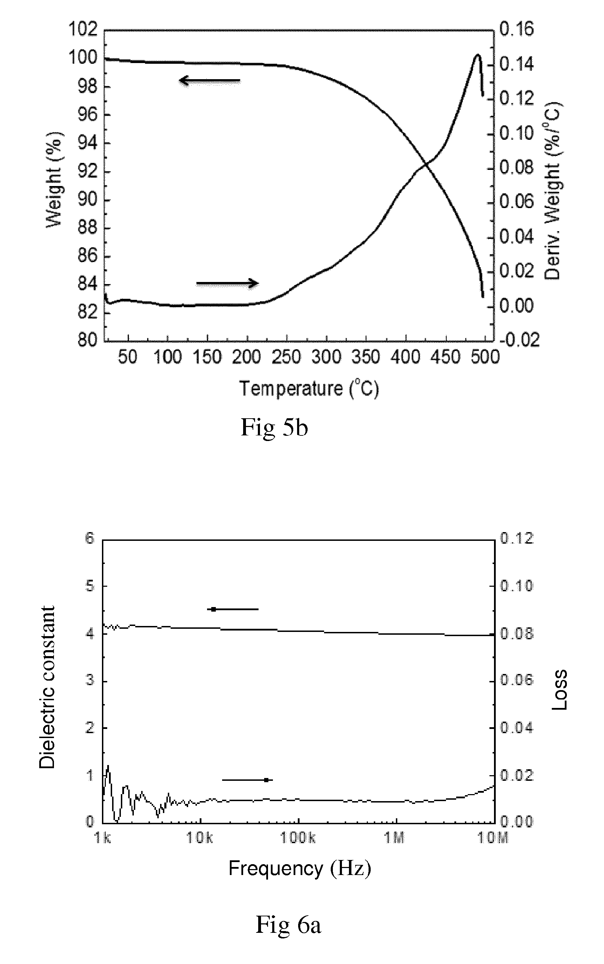

Figure 5b shows TGA of the polymer of formula II, f-AAPU, and there is no weight loss to 230°C, which indicates that the polymer of formula II is thermally stable up to 230°C. TGA was measured in TA 2050 at the ramp of 10°C/min under nitrogen. Weight% in the left y-axis and derivative weight % in the right y-axis.

In figure 6 (a) is the dielectric constant and dielectric tanδ of a melt processed film of *f*-AAPU, with thickness of around 150 um, at 25 °C disclosed. The dielectric constant of f-AAPU at 25°C is 4.10 at frequency from 1 KHz to 1 MHz and is lightly reduced at high frequency. The loss tanδ is ∼ 0.01 and keeps constantly up to frequency of 5 MHz, which can be seen in Figure 6a. Figure 6b shows the dielectric constant and dielectric loss at low frequency from 50 Hz to 1000 Hz measured by Lock-in Amplifier, which can extract a signal with a known carrier wave from an extremely noisy environment. Dielectric constant at low frequency is in a range from 4.20 to 4.10 which is consistent with the data at high frequency range, and loss tanδ is round 0.01 from 50 Hz to 600 Hz and is around 0.005 from 600 Hz to 1000 Hz. The loss tanδ is expected to reach lower values if higher purity of f-AAPU can be synthesized and isolated.

Figure 7 (a1) shows dielectric constant and loss tanδ of *f*-AAPU from 20°C to 180°C from frequency of 1 kHz to 1 MHz. The dielectric constants are in the range of 3.7-4.2. An expanded plot of dielectric constant of f-AAPU from 20°C to 180°C at frequency of 1 kHz to 1 MHz is shown in Figure 7 (a2). An expanded plot of dielectric loss of f-AAPU from 20°C to 180°C at the frequency of 100kHz and 1 MHz is shown in Figure 7 (a3). The dielectric constants of the fluorinated aliphatic-aromatic polyurea of formula II from 20°C to 180°C are in a range of 3.7-4.2 (figure 7 (a2)), and loss tanδ is 0.015 (±0.002) and keeps constantly up to 180°C, see Figure 7 (a3).

Figure 7 (b1) discloses dielectric constants and loss tanδ from frequency of 1 kHz to 1 MHz at temperature of 60 °C, 100 °C, 140 °C and 180 °C. Figure 7 (b2) shows an expanded plot of dielectric constant of f-AAPU at 60°C, 100°C, 140°C and 180°C from frequency of 1 kHz to 1 MHz. Figure 7 (b3) shows an expanded plot of dielectric loss of f-AAPU at 60°C, 100°C, 140°C and 180°C from frequency of 1 K Hz to 1 MHz. Dielectric constants are in a range of 3.7-4.2 up to 180°C, while loss tanδ is 0.014 (±0.003) and keeps constant up to 180°C.

Figure 8 (a) discloses high field Polarization to Electric Field (P-E) curves of the f-AAPU according to the invention of solvent casted films under different applied fields at 10 Hz. It presents the P-E loop of solution-casted film with a dielectric breakdown strength > 500 MV/m and a high polarization of 3.75 uC/cm². The data also reveals that the dielectric loss, which is measured by the enclosed area between the charge and discharge curves, does not increase significantly at high fields as disclosed in

Figure 8 (a), and the low dielectric loss at high fields indicate that conduction loss of f-AAPU according to formula II is extremely low.

Figure 8 (b) discloses the charge/discharge curves and efficiency of f-AAPU measured at room temperature. A discharged energy density ∼ 9 J/cm³ under 500 MV/m was obtained which is twice of that of BOPP, and charge-discharge efficiency ∼ 91 % were obtained at ∼ 500 MV/m electric field.

According to the invention a fluorinated aliphatic-aromatic polyurea, f-AAPU, according to formula I, has been synthesized, and a free standing film of f-AAPU has been produced.

Compared with dielectric materials such as for example polythiourea which is also a high density material, the dielectric material according to the present invention can be used in thermoplastic manufacturing processes while it still has good electrical properties.

Further, the dielectric material has higher dielectric properties than thermoplastic fluorinated polymers such as PTFE.

The dielectric material according to the present invention will have both high permittivity resulting in a high energy density while maintaining low dielectric losses; and can be used in thermoplastic manufacturing processes which makes the dielectric material unique. The dielectric material will have a large use area. For example, the material can be used in the temperature interval -60 to 160°C.

The fluorinated aliphatic chain, directly linked with the aromatic urea unit increases the flexibility of the polymer backbone, making it possible to be processed as a thermoplastic. The strong dipolar moment of the urea unit is still not sensitive to moisture due to the hydrophobic fluorinated aliphatic chains and the aromatic structures surrounding the urea unit.

The fluorinated aliphatic-aromatic polyurea according to the present invention will reduce both the footprint of the DC link capacitor and at the same time allow for higher ambient temperatures.

The dielectric film according to the present invention exhibit a continuously low dielectric loss within the evaluated temperature range 20 - 180 °C, in the frequency range 100 Hz - 1 MHz, without any loss peaks. In addition the dielectric constant is stable up to 160 °C.

The dielectric properties of f-AAPU when comparing with other commercial available polymer dielectric thin films, f-AAPU achieves advantages as a polymer dielectric for electric and electronic devices and systems requirements and the dielectric material and dielectric film according to the invention has excellent dielectric properties.

## Claims

1. A dielectric material **characterized in that** it comprises a polymer according to formula I 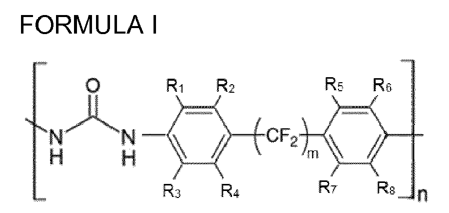 wherein R₁-R₈ are the same or different, each of R₁-R₈ is selected from the group consisting of hydrogen, a C₁-C₁₀ alkyl group and combinations thereof, and wherein m=2-15.

2. The dielectric material according to claim 1, **characterized in that** R₁-R₈ is selected from the group consisting of hydrogen, a C₁-C₆ alkyl group and combinations thereof, and wherein m=4-8.

3. The dielectric material according to claim 2, **characterized in that** each of R₁-R₈ is hydrogen and wherein m=6.

4. The dielectric material according to any of claims 1-3, **characterized in that** the material comprises 80 to 100 weight % of the polymer according to formula I and a up to and including 20 weight% of additives, calculated on the total weight of the dielectric material, the additives are selected among antioxidants, process stabilizers and fillers.

5. The dielectric material according to any of claims 1-4, **characterized in that** the polymer has a glass transition temperature (Tg) of at least 150°C.

6. The dielectric material according to any of claims 1-5, **characterized in that** the material has an energy density of at least 5 J/cm³.

7. The dielectric material according to any of claims 1-6, **characterized in that** the polymer has a dielectric loss, described by a tanδ < 0.02 at a frequency of 1 Hz to 1 MHz at 20 to 180°C.

8. The dielectric material according to any of claims 1-7, **characterized in that** the material has a dielectric breakdown strength of at least 500 V/µm.

9. A dielectric film made of the dielectric material according to any of claims 1-8.

10. The dielectric film according to claim 9, **characterized in that** the film is manufactured using a thermoplastic film extrusion process.

11. The dielectric film according to claim 9 or 10, **characterized in that** the film is metallized.

12. The dielectric film according to any of claims 1-11, **characterized in that** the film is a capacitor film.

13. An energy storage device comprising a dielectric film according to any of claims 9-12.

14. A capacitor (1) comprising a metallized dielectric film (2, 3) according to any of claims 9-12.

15. A process for preparing a dielectric film according to any of claims 9-12, comprising the steps to:
a) provide a dielectric material according to any of claims 1-8,
b) extrude the dielectric material into a film and optionally
c) metallize the dielectric film.
